# EUROPEAN PATENT APPLICATION

(11) **EP 4 768 997 A1**
(43) Date of publication of application: **01.07.2026**
(21) Application number: 25204431.8
(22) Date of filing: 24.09.2025
(51) Int. Cl.: G02B 6/42, H05K 7/20

(54) **A PLUG FOR CONNECTION TO A RECEPTACLE OF A PANEL OF AN ELECTRONIC EQUIPMENT HOUSING COMPRISING A BODY INTEGRATING AT LEAST ONE THERMAL REGULATION FLEXIBLE BLADE**

(30) Priority: 25.12.2024 WO PCT/CN2024/142306
(71) Applicant: Radiall SA, 93300 Aubervilliers (FR)
(72) Inventor: XU, Yongbo, Shanghai, 201806 (CN); GU, Yujia, Shanghai, 201806 (CN); ZHAO, Hongpu, Shanghai, 201806 (CN)
(74) Representative: Ipsilon

(57) **Abstract**

The present invention relates to a suitable passive thermal interface that is preferably entirely integrated into the plug, with one or more thermally conductive thermally conductive flexible blades which acts as spring and as a thermal conductor between the optoelectronic or electronic transceiver and the plug body and hence to the outside environment.

## Description

### Technical field

The present invention relates to an assembly for connecting a plug to a receptacle of a housing panel of an electronic device, such as a remote radio head (RRH).

The plug is intended to be mounted on at least one cable bearing one or more contacts, which are an optoelectronic converter interface, also called a *transceiver*, of SFP/SFP+, QSFP/QSFP+ or XFP type, or else an electronic transceiver interface of RJ45 type.

The invention is applicable to plugs for connection to receptacles of electronic devices that implement a plurality of optical and/or electrical paths with connections, such as are found in an outdoor environment and/or in severe conditions, in particular in telecommunications installations such as relay antennas in mobile telephony, in high-throughput data transmission networks to home or industry, in surveillance camera networks, or else for the transmission of data in railway installations.

The applications that are targeted in particular by the invention are the connection of telecommunications devices, such as base stations with a QSFP/QSFP+ optoelectronic transceiver in a remote radio head (RRH) for the wireless communications market.

The invention aims to prevent the shutdown of or damage to optoelectronic or electronic transceiver(s) integrated into the plug of a connection assembly on account of significant heat to which it is subjected during its own operation and/or during the operation of the electronic device.

Although described with reference to a SFP/SFP+ optoelectronic transceiver, the invention is applicable to any connection assembly with another type of transceiver, such as QSFP/QSFP+ or such as an electronic transceiver of RJ45 type.

### Prior art

It is known to use optoelectronic transceivers equipped with connection means such as described for example in patent US 6,430,053. This optoelectronic transceiver is able to be held up by a receptacle connected to a printed circuit board, such as described for example in application US 8,784,139.

The applicant has proposed, in patent US 9,170,385 B2, to integrate an optoelectronic transceiver within a plug, with the option of dismantling the latter for the sake of interchangeability. This solution in particular has the significant advantage that the optoelectronic transceiver does not generate heat in a remote radio head (RRH) of a base station, i.e. on the side of the electronic device around the printed circuit board.

It turns out however that using such a plug as a transceiver with a transceiver of SFP/SFP+ or QSFP/QSFP+ type in a remote radio head (RRH) of a base station produces a large amount of heat. In addition, the other components of the device generally themselves generate a large amount of heat.

A SFP/SFP+ or QSFP/QSFP+ optoelectronic transceiver is designed to be able to operate up to a temperature of the order of 85°C, even lower for QSFP/QSFP+. But the typical temperature in the receptacle 84 may be higher than this limit. At higher temperature, a protective safety mechanism of the transceiver will stop it operating, and the RRH will cease to transmit data. So, there is a need to lower this temperature in the receptacle.

One solution could consist in integrating a cooling apparatus, such as fans or heat pipe, into the inside of the electronic device, i.e. on the side of the printed circuit board, but such an apparatus would be too bulky and expensive. It would also be ineffective as the frame of the device alone would not be sufficient to dissipate the heat generated by all of the components to the outside of the device.

Furthermore, because of the increase of data speed rates, up to 112 Gbps, the needs of thermal power dissipation of the existing plugs increase. But the plug is usually installed in the radio chassis of the radio unit, a closed space where the inside temperature is high. The low temperature difference or gradient between the plug and the radio chassis prevents an efficient passive heat dissipation from the plug to the radio chassis.

Moreover, active means embedded in the radio chassis to dissipate heat, such as fans, cannot be used because of the additional electrical and space required consumptions.

Existing standard products are based on a structure where the heat sink, that dissipates heat in the air, is located onto the cage mounted on the electronic device printed circuit board and receiving the plug, on the receptacle side of the connection, in the radio unit. In this structure, the heat sink is in direct or indirect contact with the front area of the plug.

A thermal interface material (TIM) may be inserted between the plug housing and the heat sink. It can be either a copper or alloy substrate, a graphite sheet or assemblies such as heat pipes or cold plates. In this configuration of heat sink location, the heat transfer is achieved from the cage or the plug either to the air inside the radio device or to the radio chassis. But this configuration of heat transfer, even with TIM, is not efficient enough as the temperature gradient between the cage or the plug on one hand and the air inside the radio device or the radio chassis on the other hand is not significant enough.

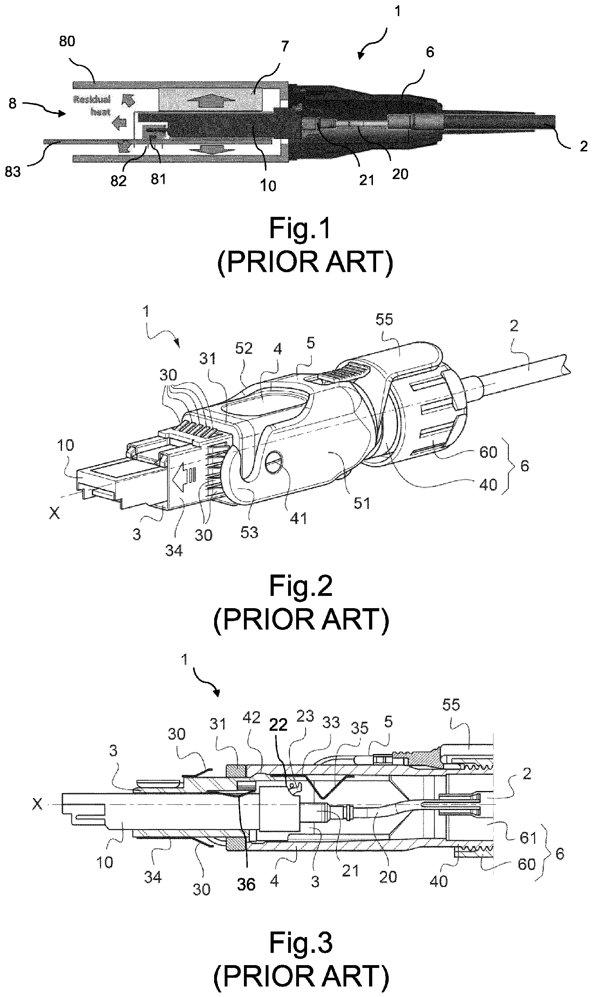

Figure 1 shows an existing plug connector 1, known as a standard I/O connector. This plug 1 may be designed to be mounted on a single optical cable 2 which may comprise optical fibres 20, each free end of one optical fibre 20 carrying an optical connector 21, which is connected at its free end to an input of the transceiver 10. This I/O plug comprises a cable gland 6 for retention and sealing of the cable 2.

In the shown configuration, the plug 1 is connected and locked to a chassis 80 of electronic equipment (radio equipment) 8 whose SFP connector 81 with contacts 82 connected to the transceiver 10 of the plug 1 is supported by a printed circuit board 83.

As illustrated also in this Figure 1, a heat sink 7 is arranged between the top of the transceiver 10 or the top of the cage receiving the plug (with possibly a TIM between them) and the interior wall of the chassis 80. The big arrows symbolize the resulting heat transfer.

Such a heat dissipation structure is inadequate to solve the problem of low temperature gradient between the plug body and the radio chassis 80.

An improvement was brought by the RADIALL company with the outdoor plug connector commercialized under OCTIS^{™} trademark.

Such an OCTIS^{™} optical plug 1 is shown on Figures 2 and 3. This plug 1 is designed to be mounted on a single optical cable 2 which may comprise optical fibres 20. Each free end of an optical fibre 20 of the cable 2, carries an optical connector 21.

The plug 1 has a body 3, 4 which extends along a rectilinear longitudinal axis X.

The plug body 3, 4 is made of two pieces one making up the front part 3 and the other the rear part 4.

An optoelectronic converter 10, also called a transceiver, may be secured in a removable and interchangeable manner inside a seat of the front part 3 of the body. The transceiver 10 protrudes beyond the front part 3 of the plug body.

The optoelectronic transceiver 10 is in contact with the front part 3 of the plug body 1, such that the housing of this optoelectronic transceiver 10 is at the same electrical potential as this front part 3.

The optical connector(s) 21 is connected at one end to an optical fibre 20 and connected at the other end to an input of the transceiver 10. The optical connectors 21 are, for example, contacts of LC type and the optoelectronic transceiver 10 is for example a transceiver of SFP type.

Each optical connector 21 may comprise at least one tab 23 on its upper surface 22, the tab 23 being deformable elastically about an axis perpendicular to the longitudinal axis of the contact. Pressing on this tab 23 produces its elastic deformation orthogonally to the plane defined by these two axes, which allows to release the optical connector 21 from a complementary connection element, especially an optoelectronic transceiver, to which it is connected.

The front part 3 of the plug body may be made for example of moulded aluminium or pressure-moulded zamak, coated with an anticorrosion and possibly electrically conductive protection, or made of plastic, with metallization.

A bushing 34 made of electrical conductor material may be fitted around the front part 3 of the body, with the possibility of an axial sliding on this front part 3.

This bushing 34 bears a tab 33 with an appendage 35. The tab 33 for a major portion of its length hugs the interior wall of the rear part 4, and its appendage 35 is oriented toward the inside of the rear part 4. In the area of a curved portion of the tab 33 forming the appendage 35, one may provide a pad or even a simple inclined plane integrated with the tab 33.

The bushing 34 further carries a plurality of flexible tabs 30 made of electrical conductor material, distributed over the outer periphery of the front part 3 of the body.

These flexible tabs 30 are adapted to remain in mechanical and electrical contact with the interior of the chassis 80, especially with the inner surface of the receptacle 84, when the front part 3 of the body is mated therein.

A seal 31 may advantageously be integrated with the front part 3. This seal 31 makes it possible to produce the tightness at the interface between the plug 1 and the chassis 80 in which the front part of the plug body is meant to be seated during the connection.

The rear part 4 is designed to house the end of the optical fibres 20 of the cable 2 which itself carries the connectors 21. The rear part 4 may be made of plastic material, for example. The rear part 4 may be mounted floating on the front part 3.

A single spring tab 36 maintains the optical transceiver 10 in the front part 3 of the body.

A locking lever 5 with two arms 51, 52 is mounted pivoting about an axis 41 on the rear part 4 of the plug body. The pivoting axis 41 may be moulded as a single piece with the rear part 41. The free end of each arm 51, 52 comprises a locking hook 53, 54. The lever 5 may be configured with a gripping part 55 which allows in easy fashion a manual pivoting of the lever 5 about the axis 41.

The plug 1 also comprises a cable gland 6 for retention and sealing of the cable 2. The cable gland comprises a nut 60, such as one made of plastic, designed to screw onto the rear part 4 of the plug body 2.

The nut 60 comprises an inner thread designed to be screwed around the exterior thread of the rear end 40 of the rear part 4 of the plug body 1, the screwing bringing about the compression of a seal 61 arranged around the cable 2.

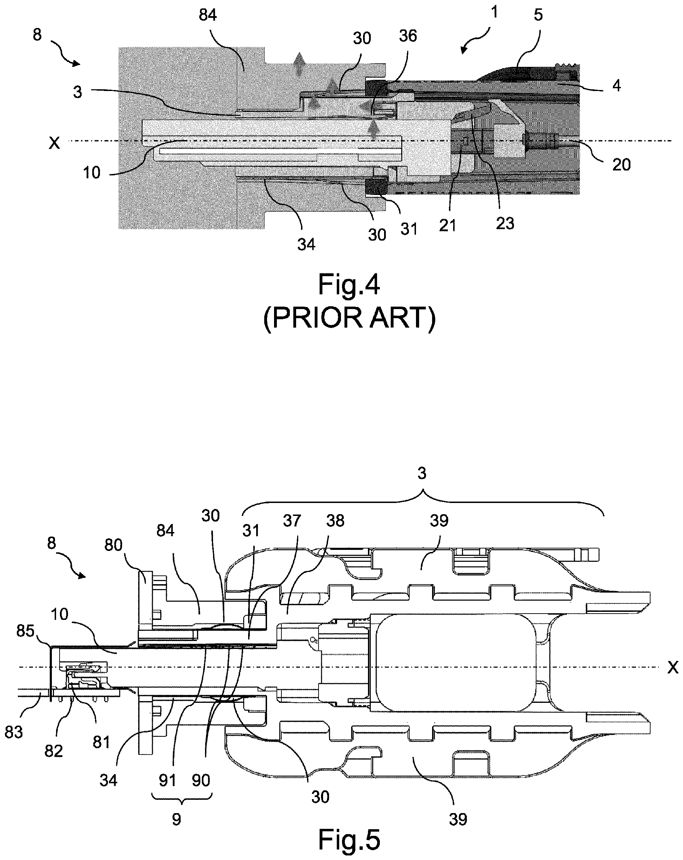

As shown by the arrows on Figure 4, in this OCTIS^{™} plug 1, the thermal path from the plug 1 to the air in the external environment involves several interfaces, i.e. from the optical transceiver 10 to the flexible tab 36, from the flexible tab 36 to the front body 3, from this front body 3 to the bushing 34 and the tabs 30, from these tabs 30 to the receptacle portion 84 integrated to or fixed to the radio chassis 80 and finally from this receptacle 84 to external air.

In other words, the existing OCTIS^{™} plug 1 embodies four stages of a direct heat transfer between the plug transceiver and the radio chassis which acts as a heat sink operating by convection to outside air. Thus, it has the main advantage to not transfer residual heat inside the chassis 80. Besides, it saves space inside the chassis 80. But, it does not allow to dissipate sufficiently a higher heat, for the targeted connector, i.e. with a transceiver with higher power consumption.

US2024/0206129A1 patent application discloses a pluggable module including a passive thermal transfer component comprising two distinctive elements, namely a heat conductor chosen among a metal blade, a graphite sheet, a heat pipe and an elastic assembly, intended to apply a force on the heat conductor, in order to press the heat conductor against the pluggable module and the heat sink, and then reducing the thermal contact resistance. Thus, this passive component dissipates the heat in the same way at the existing OCTIS^{™} plug, that is to say from the radio receptacle to the external air. In that sense, this solution cannot dissipate a high level of heat as required for a transceiver with a high-power consumption. Besides, the solution according to this patent application has the following major drawbacks:
- the thermal path between the pluggable module and the heat conductor, is quite long, involving a higher radiative and convection effect along the thermal path, and then reducing the heat transfer efficiency in the heat sink,
- in the first described embodiment, the surface dedicated to thermal exchange between the pluggable module and the heat conductor on one hand, and between the heat sink and the heat conductor is limited,
- the heat sink is still attached to the radio chassis, increasing the weight of the radio unit, opposite to the current trend,
- because of the superimposition of two elements, i.e. the heat conductor and the elastic assembly, the design doesn't seem adapted to be embedded in the limited space of an outdoor plug connector.

There is therefore a need to improve the connecting solution of a plug/pluggable module to an optoelectronic or electronic transceiver, to a housing receptacle of an electronic device, in particular of a remote radio head (RRH) of a base station, in order to completely or partly rectify the above-mentioned drawbacks of the prior art.

In particular, there is a need to improve the thermal path for draining out the heat generated by the transceiver to the outside ambient air, and to enhance the temperature gradient between the area surrounding the transceiver and the ambient air.

The purpose of the invention is to meet this(these) need(s) at least in part.

### Disclosure of the invention

To this end, the invention relates to a plug, intended to be mounted on at least one cable whose one end supports one or more contacts, comprising:
- a front body, that extends along a longitudinal axis (X) and the front body comprising:
   a front portion housing at least one optoelectronic or electronic transceiver, intended to be connected to the contact(s) of the cable, the front portion being intended to be housed in a receptacle when the optoelectronic or electronic transceiver is connected to the connector supported by a printed circuit board of an electronic device,
   a rear portion in the rear extension of the front portion, designed as a heat sink in direct contact with the environment air;
- at least one passive thermal transfer device thermally conductive flexible blade with at least:
   a first end portion pressing against an inner surface of the front portion,
   and an intermediate portion acting as a spring, and
   a second end portion pressing against the outer surface of the optoelectronic or electronic transceiver.

Preferably, at least one thermally conductive flexible blade extends along a longitudinal axis (Y) transverse, notably orthogonal to the longitudinal axis (X).

Advantageously, the plug comprises a plurality of thermally conductive flexible blades distributed, preferably regularly, along the optoelectronic or electronic transceiver.

According to one variant implementation, the rear portion comprises a plurality of cooling fins designed to evacuate the heat into the outside environment. Thus, by virtue of these cooling fins, the heat from the optoelectronic transceiver, evacuated by the passive thermal device, is dissipated more easily and quickly into the outside environment. Preferably, these fins extend longitudinally on the top and bottom sides of the rear portion, in order to limit the width of the plug, improving the density of installation on the radio unit, with a limited pitch between adjacent plugs.

According to a variant, transverse through holes are implemented on the fins. The through holes allow transverse airflow through the fins, and then improve the cooling regardless of airflow direction. Besides, they decrease the weight of the plug connector to be mated to an electronic equipment such as a radio unit.

According to one advantageous embodiment, the front portion has at least one slot opening inwards and in which the straight portion of the at least one thermally conductive flexible blade is inserted. In other words, there is not support frame as an intermediate component, and the straight portion defining the contact area of the elastic blades is slid into a slot opening toward the inner cavity of the front body. It allows a low thermal contact resistance between the blades and the front part of the front body.

According to another advantageous embodiment, the at least one passive thermal transfer device comprises:
- a rigid frame mounted onto the front portion,
- the thermally conductive flexible blade(s) which are hold and positioned in the rigid frame, such that the straight portion(s) presses against the inner surface of the front portion and the curved portion(s) acts as a spring pressing against the outer surface of the optoelectronic or electronic transceiver.

The rigid frame portion is dedicated to the mounting of the passive thermal device onto the front part and to hold and position the thermally conductive flexible blade(s) between the transceiver and the front part.

According to this embodiment a first variant, the rigid frame and the thermally conductive flexible blade(s) are separate components, the rigid frame comprising mounting slot(s) in which the straight portion of the thermally conductive flexible blade(s) are inserted by rotating the thermally conductive flexible blade(s) such that they are hold by the rigid frame.

According to this first variant, the rigid frame comprises supplemental slot(s) each being adjacent to a mounting slot and adapted to receive a part of the curved portion of one blade when this latter bends.

According to this embodiment a second variant, the frame and thermally conductive flexible blades comprise a plurality of adjacent one-piece parts attached to each other, each one-piece part comprising at least one thermally conductive flexible blade and a portion of the frame forming the straight portion of the thermally conductive flexible blade. This variant simplifies the design of the thermal device with a frame.

Advantageously, for grounding and/or electromagnetic shielding purposes, the rigid frame comprises a plurality of flexible tabs made of electrically conductive material and distributed on the outer periphery of the front part, the flexible tabs being designed to remain in mechanical and electrical contact with the inside of the receptacle when the front part of the body is housed in the latter. Advantageously, the plurality of flexible tabs forms an apparatus for protecting against electromagnetic interference (EMI) and/or advantageously also a lightning strike. The flexible tabs thus provide perfect ground continuity and/or electromagnetic shielding. Ground continuity is preferably able to be ensured by way of a metal braid fastened around the cable on which the plug is mounted and linked to ground potential at its opposite end.

Preferably, the rigid frame is in a copper alloy with a low thermal conductivity, typically equal to 30 W/m.K or less at ambient temperature.

Preferably also, the thermally conductive flexible blade(s) is(are) in a copper beryllium alloy with a high thermal conductivity, typically equal to 100 W/m.K or more at ambient temperature.

Preferably, the front body is made of high thermal conductivity material, such as aluminium or aluminium alloy, preferably die-cast aluminium alloy.

According to one advantageous embodiment, the plug comprises a rear body removably fixed to the front body, the rear body forming a sheath, designed to house that end of the cable bearing the contact(s) itself.

The optoelectronic transceiver is advantageously of SFP/SFP+, QSFP/QSFP+ or XFP type.

According to one advantageous embodiment, the plug comprises a lever for locking to a receptacle, the locking lever being mounted pivotably on the front body, the lever comprising two locking hooks distributed on either side of the front body and intended to interact with two locking lugs distributed on either side of the receptacle. Thus, this rotating locking lever secures the plug on the receptable.

According to one advantageous variant implementation, the plug may comprise a gasket borne by the front body.

According to one advantageous variant, the front portion includes, at its free end, a recess adapted to cooperate with a protrusion in the cavity of the receptacle. This recess prevents a misconnection of the plug with a rotation of 180°. Thus, it has the function of a foolproof device, to prevent a connection error between the plug and the receptacle.

According to one variant implementation, the optoelectronic transceiver(s) may project beyond the front part.

The invention concerns also a passive thermal transfer device comprising at least one thermally conductive flexible blade with at least:
- a first end portion configured to press against an inner surface of the portion of a body of a plug or a portion of a receptacle,
- an intermediate portion acting as a spring,
- a second end portion configured to press against the outer surface of an optoelectronic or electronic transceiver of the plug,
- a rigid frame including at least one mounting slot into which the at least one flexible blade is mounted with clearance.

In an advantageous variant,. the rigid frame has a plate including the at least one mounting slot and having an upper side and a lower side, the plate holding and positioning the at least one thermally conductive flexible blade such that the first end portion faces the upper side of the plate (910) whereas the second end portion faces the lower side of the plate.

In another advantageous variant the at least one flexible blade has a straight portion and at least one transverse slot which split said straight portion and the second end portion.

The invention relates also to a connection assembly comprising:
- a plug such as mentioned above,
- a receptacle of an electronic device configured to be connected with the plug.

In other words, the invention defines a suitable passive thermal interface that is preferably entirely integrated into the plug, with one or more thermally conductive thermally conductive flexible blades which acts as spring and as a thermal conductor between the optoelectronic or electronic transceiver and the plug body and hence to the outside environment.

Thus, each thermally conductive flexible blade forms a direct heat transfer link, with a short heat transfer path and is directly in contact with the converter (transceiver) and the front part of the front body configured as a heat sink. As each elastic blade applies a biasing force on both parts, it provides a reduced thermal contact resistance between the transceiver and the front body of the plug.

Thanks to the thermally conductive flexible blades, the transceiver can slightly move transversally in the cavity where it is located, correcting the misalignment default between the front body plug and the radio unit socket and allowing the mating of the transceiver within the socket connector on the PCB of the electronic equipment such a radio unit.

The passive thermal transfer device according to the invention can withstand cycles of insertion/removal of the transceiver, notably for maintenance reasons, while keeping the same cooling performances.

The passive thermal transfer device according to the invention allows to keep the intermateability and interchangeability with current existing plugs, notably with the OCTIS^{™} products, in case that a high-power transceiver might be flexibly used in lieu and place of a low power transceiver and vice-versa.

As a result, the passive thermal regulation module makes it possible to prevent any interruption of the data transmission by an RRH that is equipped with a plug according to the invention.

The main advantages obtained by a plug with a passive thermal transfer device according to the invention are numerous and can be itemized as follows:
- a larger area of thermal contact between the transceiver and the front body configured as a heat sink, thanks to the densification of the thermal links formed by a plurality of thermally conductive flexible blades,
- a unique and direct component, a thermally conductive flexible blade, as a heat conductor between the module and the front body configured as a heat sink,
- a short length of the thermal path provided by a thermally conductive flexible blade, reducing the heat conduction loss and the radiation of the blade,
- a compact design of the thermal transfer device, thanks to the short length of the thermal path, allowing to house the device in the cavity of a plug front body,
- a higher temperature gradient between the transceiver and the front body configured as a heat sink located in the external environment, allowing better heat conduction,
- an absorption of mechanical default of misalignment of the transceiver relatively to the plug body, thanks to the thermally conductive flexible blades,
- an absorption of the surface flatness default of the transceiver and/or the front part, thanks to the thermally conductive flexible blades,
- a fine tuning of the insertion/extraction force of the transceiver in the plug body, thanks to the adaptation of the design of the thermally conductive flexible blades,
- a low manufacturing cost of the passive thermal transfer device components and a low assembly cost : parts have a simple shape easy to manufacture. For the embodiment with a rigid frame, the assembly of the blades into the frame is quite simple,
- a low maintenance cost of the plug: removal and replacement of the default pluggable transceiver is easy and the plug can withstand a large number of replacement cycles,
- a thermal insulation between the front part of the front plug body and a chassis of an electronic equipment, such as the one of a radio unit: no heat transfer from the chassis to the front body configured as heat sink,
- the advantageous implementation of cooling fins on top and bottom surfaces of the rear part of the body improving the cooling and allowing to reduce the installation pitch between adjacent plug connectors,
- the implementation of through holes in the fins to allow a transverse air flow and optimize the heat dissipation with any natural air flow directions, i.e. along fins and/ or perpendicular to the fins.

In other words, the invention allows to dissipate the heat generated by the transceiver, thanks to a passive heat transfer device towards the plug body, and thereby to the outside air. Heat dissipation takes place without passing through the receptacle of the radio chassis, thereby providing the best thermal gradient between the transceiver and the outside air.

### Detailed description

Other advantages and features of the invention will become more apparent upon reading the detailed description of exemplary implementations of the invention, given by way of nonlimiting illustration, and with reference to the following figures, in which:
- Figure 1 is a side view of a connection assembly according to the prior art, with a plug integrating an optoelectronic transceiver of 'SFP/SFP+ or QSFP/QSFP+' type in a configuration in which it is connected and locked to a receptacle of an electronic device housing panel, the optoelectronic transceiver of the plug being connected to the contact of the SFP connector mounted on the surface of the printed circuit board of the electronic device, a thermal heat sink being housed and held into the chassis of the electronic device;
- Figure 2 is a perspective view of an existing plug, commercialized under OCTIS^{™};
- Figure 3 is a longitudinal sectional view of the plug according to Figure 2;
- Figure 4 is a longitudinal sectional view of the OCTIS^{™} existing plug in a configuration in which it is connected and locked to a receptacle of an electronic device housing panel, the optoelectronic transceiver of the plug being connected to the contact of the SFP connector mounted on the surface of the printed circuit board of the electronic device, the receptacle housing and holding a ring with grounds tabs arranged around the transceiver;
- Figure 5 is a longitudinal sectional view of an example plug with a passive thermal transfer device according to the invention, in a configuration in which it is connected and locked to a receptacle of an electronic device housing panel, the optoelectronic transceiver of the plug being connected to the contact of the SFP connector mounted on the surface of the printed circuit board of the electronic device, the passive thermal transfer device being inserted into the gap between the front part of the plug body and the transceiver;
- Figure 6 is a perspective view of the plug of the invention according to Figure 5;
- Figure 7 is a longitudinal side view of the plug of the invention according to Figures 5 and 6, without the transceiver;
- Figure 8 is a detailed longitudinal sectional view of the plug of the invention according to Figures 5 and 6, with the transceiver;
- Figure 9 is a perspective view of a first embodiment of the passive thermal transfer device according to the invention, including a rigid frame in which thermally conductive flexible blades are inserted;
- Figure 10 is another partial perspective view of the embodiment of passive thermal transfer device according to Figure 9;
- Figure 11 is a perspective view of a thermally conductive flexible blade of the passive thermal transfer device according to the invention;
- Figure 12 is a side view of a thermally conductive flexible blade of the passive thermal transfer device according to the invention;
- Figure 13 is a perspective view showing details of the rigid frame of the passive thermal transfer device according to the invention;
- Figure 14A to 14E are views illustrating the different steps of assembly of the front body with the passive thermal transfer device and the transceiver of a plug according to the invention;
- Figure 15 is a perspective view of a variant of the first embodiment of the passive thermal transfer device according to the invention, including a plurality of one-piece parts, each including a rigid frame with thermally conductive flexible blades;
- Figure 16 is a perspective view of the one-piece part according to the embodiment of Figure 15;
- Figure 17 is a side view of the one-piece part according to Figure 16;
- Figure 18 is a perspective view of a variant of the first embodiment of the passive thermal transfer device according to the invention, including a rigid frame in which thermally conductive flexible blades are inserted;
- Figure 19 is a perspective and partial longitudinal sectional view of a plug including the passive thermal transfer device according to the variant of Figure 18;
- Figure 20 is a longitudinal sectional view of a second embodiment of the passive thermal transfer device according to the invention, including only thermally conductive flexible blades each inserted into a slot provided in the front part of the plug;
- Figure 21 is a perspective view of a variant of the plug with a passive thermal transfer device according to the invention, in a configuration in which it is connected and locked to a receptacle of an electronic device housing panel, the optoelectronic transceiver of the plug being connected to the contact of the SFP connector mounted on the surface of the printed circuit board of the electronic device, the plug being locked to the receptacle by a lever pivotally mounted onto the front body of the plug.

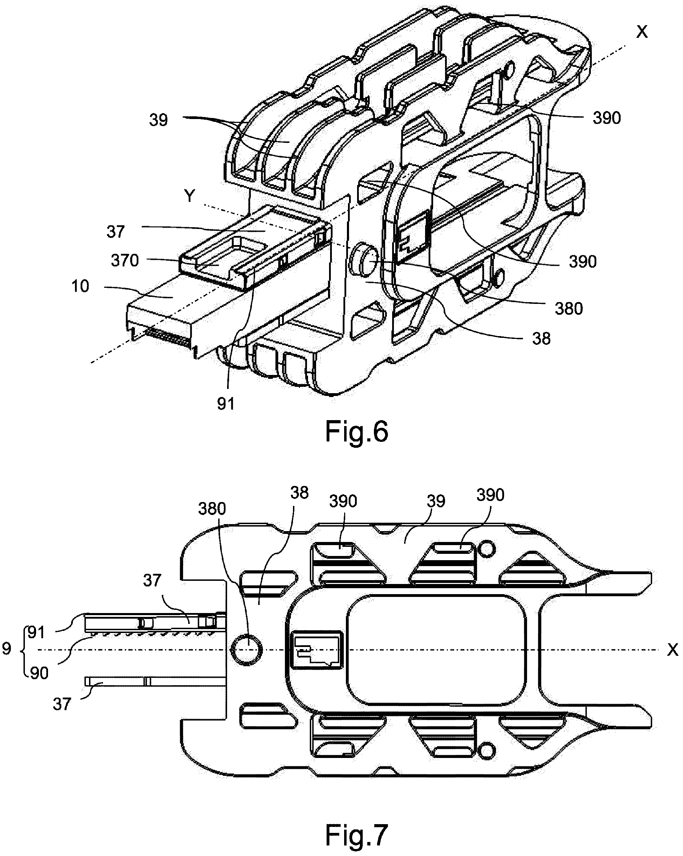

For the sake of clarity, the same references denoting the same elements of a plug, receptacle and electronic device according to the invention are used for all of Figures 1 to 21.

For the sake of clarity also, in figures 5 to 21 related to the invention, the connection between the transceiver 10 of the plug according to the invention and a cable is not shown. It can be done as in the prior art, i.e. one or more optical connectors 21 may be linked at one end to an optical fibre 20, in particular an optical fiber, of a single cable 2, and be connected at their other end to an input of the transceiver 10. The optical contacts 21 are for example contacts of LC type, and the optoelectronic transceiver 10 is for example a transceiver of SFP/SFP+ type. For a QSFP/QSFP+ type, the contacts may also be of MT ferrule type.

For the sake of clarity also, in figures 5 to 21 related to the invention, the rear body of the plug, i.e. the one which is situated on the side via which the cable/cord is housed and held in the plug, is voluntarily omitted. Preferably, the rear body forms a sheath designed to house the end of the cable 2 bearing the connectors 21 itself. The rear body may be made of plastic, for example. The rear body may be mounted so as to float around the front body 3 of the plug.

It is specified that the terms 'front' and 'rear' refer to a plug according to the invention. The front part of the front plug body is thus the one situated on the side of the interface with the receptacle of the radio unit, whereas the rear part extends rear to the front part.

Figures 1 to 4 related to the prior art have been already described in the preamble. They are not detailed hereinafter.

Figures 5 to 8 show a first embodiment of a plug according to the invention, denoted overall by 1, and an exemplary implementation of an assembly for connecting said plug 1, to a receptacle 84 applied and fastened to a panel 80 of an electronic device 8 housing configured to receive a plurality of optical, electrical, power or data signals, or any combination of these signals.

As illustrated in Figure 5, the plug 1 is in a configuration in which it is connected to the receptacle 84, as detailed hereinafter.

The electronic device 8 comprises a printed circuit board 83. A SFP connector 81 is mounted on the PCB 83. The connector 81 comprises electrical contacts 82, electrically connected to the transceiver 10 and to the printed circuit board 83. The connector 81 and at least partially the transceiver 10 are protected by a surrounding cage 85.

The plug 1 includes a front body 3 that extends along a rectilinear longitudinal axis X and that includes two portions 37, 38.

The front body 3 may be made for example of die-cast zamak or aluminium alloy, coated with an anticorrosive and electrically conductive protective coating or else made of plastic(s) with or without metallization.

The front portion 37 houses an optoelectronic or electronic transceiver 10, intended to be connected to the contact(s) of the cable. As shown on figure 5, in the connected configuration, the front portion 37 is housed in the receptacle 84 when the optoelectronic or electronic transceiver 10 is connected to the SFP connector(s) 81 supported by the printed circuit board 83. The receptacle 84 may be integral with the panel 80.

The front portion 37 includes, at its free end, a recess 370 adapted to cooperate with a protrusion in the cavity of the receptacle 84. This recess prevents a misconnection of the plug with a rotation of 180°. Thus, it has the function of a foolproof device, to prevent a connection error between the plug and the receptacle.

The rear portion 38 is in the rear extension of the front portion 37 and is designed as a heat sink in direct contact with the environment air.

The rear portion 38 includes a plurality of cooling fins 39 designed to evacuate the heat into the outside environment. Preferably, as illustrated on Figures 5 to 7, the cooling fins 39 are implemented on top and bottom surfaces of the rear part 38, in order to improve the cooling and to reduce the installation pitch between plug connectors adjacent to the plug 1.

The cooling fins 39 include preferably through holes 390 to allow a transverse air flow and to optimize the heat dissipation with any natural air flow directions, i.e. along fins and/ or perpendicular to the fins.

The optoelectronic transceiver 10 may be fastened in a detachable and interchangeable manner inside a recess in the front part 37 of the front body 3 provided for this purpose. The transceiver 10 projects beyond the front part 37 of the front body 3.

In the illustrated example, the optoelectronic transceiver 10 is in contact with the front part 37 of the front body of the plug 1, such that the housing of this optoelectronic transceiver 10 is at the same electrical potential as this front body 3.

As shown on Figure 5, a gasket 31 may advantageously be carried by the front part 3. This gasket 31 makes it possible to create seal tightness at the interface between the plug 1 and the receptacle 84 in which the front part of the plug body is intended to be housed during the connection.

According to the invention, a passive thermal transfer device 9 is inserted into the gap between the upper surface of the transceiver 10 and the inner surface of the front portion 37 which is typically equal to 0.8 mm, and minimum to 0.6 mm.

This passive thermal transfer device 9 comprises at least one thermally conductive flexible blade 90 which acts as a spring conducting heat from the transceiver 10 to the front portion 37 and hence to the rear portion 38 of the body 3 configured as a heat sink. Preferably, the thermally conductive flexible blade is in a copper beryllium alloy with a high thermal conductivity, typically equal to 100 W/m.K or more at ambient temperature.

In other words, a thermally conductive flexible blade 90 according to the invention provides at the same time an elastic function, by applying a force or pressure directly on a surface of the transceiver 10 and directly on a surface of the front portion 37 of the front body 3, and a thermal conduction function between the surface of the transceiver and the surface of the front portion, by extracting heat emitted by the transceiver 10 towards the front portion 37.

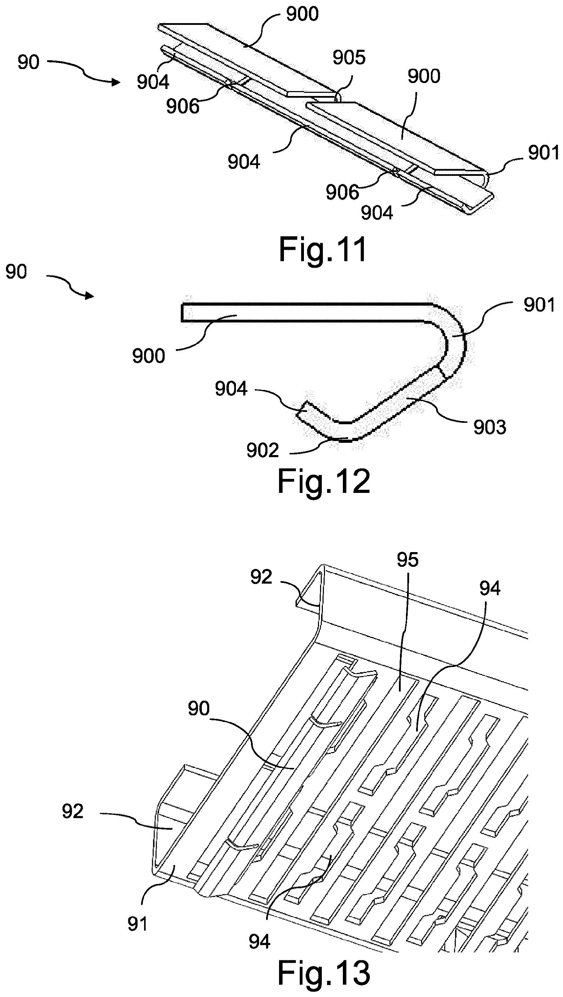

A thermally conductive flexible blade 90 is illustrated on Figures 11 and 12: it includes a first straight portion 900 pressing against an inner surface of the front portion 37 or alternatively against an inner surface of the receptacle 84, and a first curved portion 901, at one end of the first straight portion 900. The thermally conductive flexible blade 90 also includes a second straight portion 903 at a second end of the first curved portion 901, having an angle, preferably less than 90°, preferably less than 45° with the first straight portion 900. In other words, the second straight portion 903 is folded over the first straight portion 900 and the first curved portion 901 is intermediate between the first straight portion 900 and second straight portion 903.

The thermally conductive flexible blade 90 includes a second curved portion 902, at the end of the second straight portion 903. The free end 904 of the second curved portion 902 is oriented towards the first straight portion 900. The first curved portion 901 acts as a spring, allowing the second curved portion or apex 902 to press against the outer surface of the optoelectronic or electronic transceiver 10.

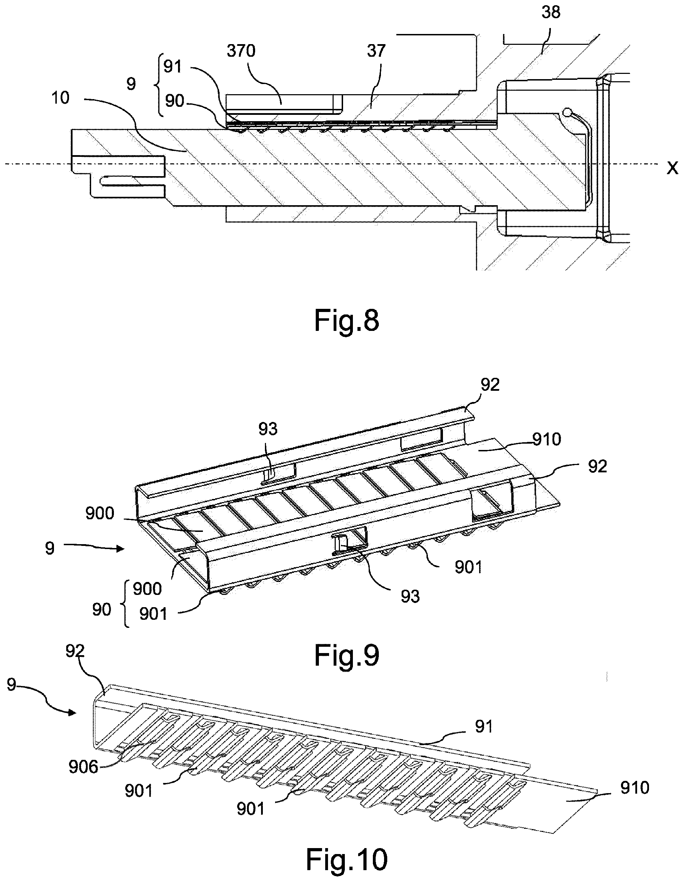

As the free end 904 of the second curved portion 902 is oriented towards the first straight portion 900, as shown in figure 8, there is no mechanical contact between the edges of the free end 904 and an outer surface of the transceiver 10.

Even if the edges of the free end 904 are sharp, they cannot wear the outer surface of the transceiver 10. As the free end 904 cannot be in contact with the outer surface of the transceiver, this latter can slide smoothly against the second curved portion 902 of the thermally conductive flexible blade, without involving damage to the said blade or to the transceiver. In addition, the first curved portion 901 is adapted to withstand multiple insertion / removal of the pluggable transceiver 10. The copper beryllium alloy preferably used for the thermally conductive flexible blade 90 provides high elastic mechanical characteristics as well.

The thermally conductive flexible blade 90 is configured with a short thermal path between the two contact areas defined by portions 900 and 902. Typically, the length of the thermal path is between 3.5 and 4 mm.

In the installed configuration a thermally conductive flexible blade 90 extends according to an axis Y orthogonal to the longitudinal axis X. The first straight portion 900 may be split along its extension according to the Y axis by a slot 905.

The second straight portion 903 and the second curved portion 902 are split by at least one transverse slot 906, preferably two slots 906, going from the intersection between the first curved portion 901 and the second straight portion 903, to the free end 904.

These slots 906 allow to adapt the bending of the second straight portion 903 of the flexible blade 90 to the outer surface of the transceiver 10, if this outer surface comprises several offset planes or heights.

In the embodiment according to Figures 5 to 8 the passive thermal transfer device 9 comprises a rigid frame 91 mounted onto the front portion 37, along the longitudinal direction X.

A plurality of thermally conductive flexible blades 90 are held in the rigid frame 91 such that the straight portion 900 presses against the inner surface of the front portion 37 or alternatively against the inner surface of a receptacle 84 and the second curved portion or apex 902 presses against the outer surface of the optoelectronic or electronic transceiver 10. The thermally conductive flexible blades 90 are preferably regularly spaced along the longitudinal direction of the frame 91.

Preferably, the rigid frame 91 is made of copper alloy.

As shown on Figures 9 and 10, the rigid frame 91 and the thermally conductive flexible blades 90 may be separate components.

In this variant, the rigid frame 91 comprises two rails 92 to attach by sliding the frame 91 onto the upper side of the front body 37. A flexible tab 93 on the lateral side of each rail 92 may be provided to ensure the positioning of the bushing 34.

The rigid frame 91 comprises between the two rails 92, a flat surface as a plate 910, with an upper side and a lower side.

As shown on Figure 13, the plate 910 of the rigid frame 91 includes mounting slots 94 in which the straight portion 900 of the thermally conductive flexible blades 90 is inserted by rotating the thermally conductive flexible blades until the first curved portion 901 is substantially coincident with the mounting slot 94 and such that the thermally conductive flexible blades are held and positioned by the rigid frame.

Each flexible blade 90 is inserted with clearance into the mounting slot 94 so that said flexible blade 90 can rotate into said slot 94 along its longitudinal axis. The allowed rotation of the flexible blade 90 into slot 94 enables a better contact force balance against on one hand the plug front portion 37 or the receptacle 84, and on the other hand the transceiver 10. The extremity of the straight portion 900 faces the upper side of the plate 910 whereas the free end 904 of the curved portion 902 faces the lower side of the plate 910.

According to an advantageous variant, as shown on Figure 13, the rigid frame 91 comprises supplemental slots 95 each being adjacent to a mounting slot 94 and adapted to receive the free end 904 of the second curved portion 902 of one blade when this latter bends. The supplemental slots 95 allow a more compact thermal transfer device, after insertion of the transceiver in the front portion 37.

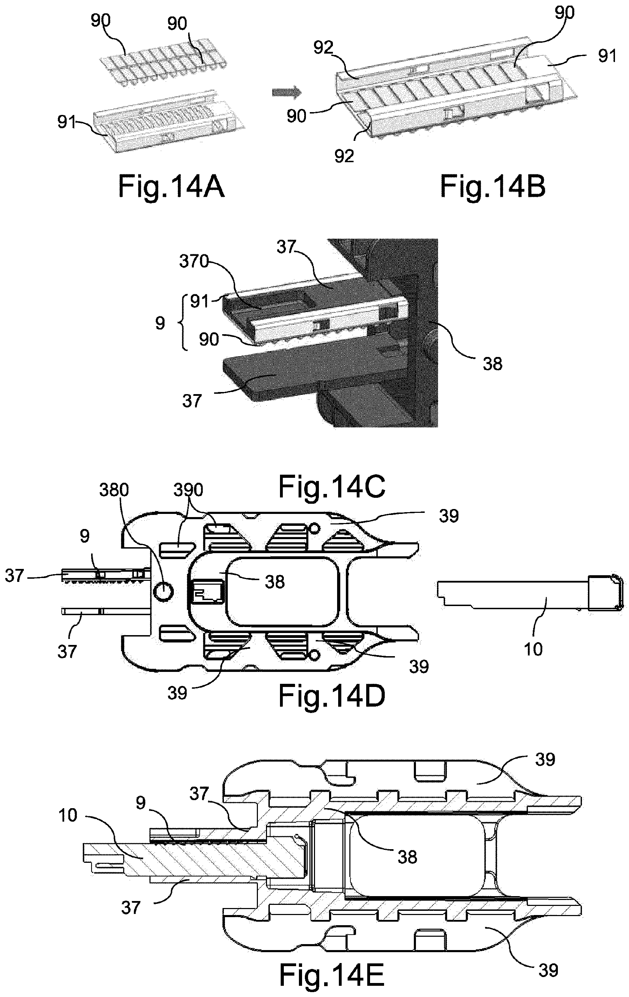

A description is now given of the assembly operations of the front body 3 of the plug 1 together with the passive thermal transfer device 9 and with the transceiver 10, with reference to Figures 14A to 14E.

The operator independently brings the thermally conductive flexible blades 90 and the rigid frame 91 (Figure 14A).

The operator proceeds to the insertion of each thermally conductive flexible blade 90 into the frame 91, each through a mounting slot 94 (Figure 14B). In this configuration, the device 9 is assembled.

Then, the operator assembles the thermal transfer device 9 on the front body 3 by sliding and snapping the device 9 onto the front portion 37 (Figure 14C).

Once the device 9 has been assembled onto the front body 37, the operator brings an optoelectronic or electronic transceiver 10 by the rear portion 38 (Figure 14D).

Then, the transceiver 10 is inserted into the front portion 37 with its upper surface sliding against second curved portions/apexes 902 of thermally conductive flexible blades 90. As shown on Figure 14E, the final position preferably corresponds to a longitudinal abutment against the front body 3. The lower surface of the transceiver 10 lies on the inner lower surface of the front portion 37 of the body 3.

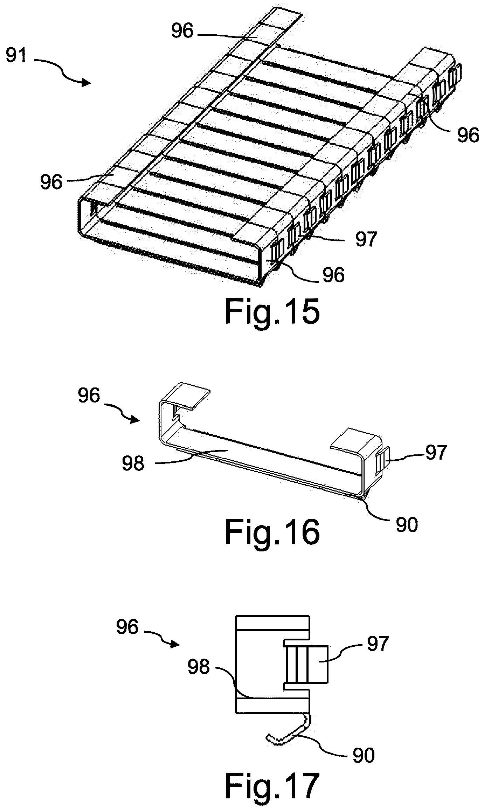

In the variant shown on Figure 15 to 17, the frame 91 and thermally conductive flexible blades 90 are replaced by a plurality of adjacent one-piece parts 96 attached to each other by attachments tabs 97.

Each one-piece part 96 comprises at least one thermally conductive flexible blade 90 and a portion 98 of the frame forming the straight portion of the thermally conductive flexible blade 90.

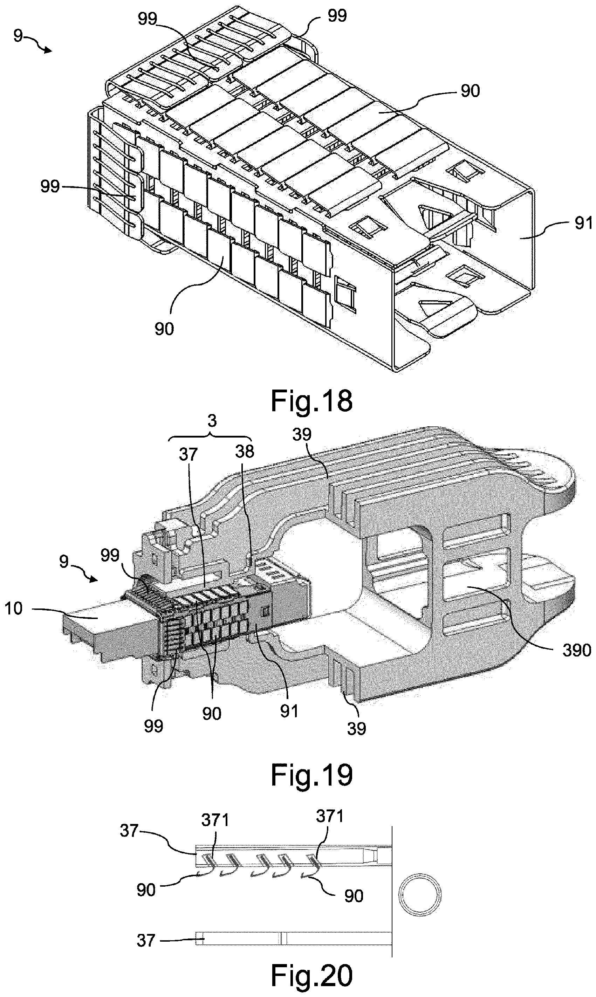

Figure 18 shows an advantageous variant of the rigid frame 91. The rigid frame 91 comprises a plurality of flexible tabs 99 made of electrically conductive material and distributed on the outer periphery of the front part 37, as shown in figure 19. These flexible tabs 99 may be formed integrally with the rigid frame 94 while being distributed, preferably regularly, on its outer periphery.

Moreover, these flexible tabs 99 are designed to remain in mechanical and electrical contact with the inside of the receptacle 84 when the front part 37 of the body is housed in the latter.

Thus, these tabs 99 form a shield against electromagnetic interference (EMI) and/or advantageously also against a lightning strike. The flexible tabs thus provide perfect ground continuity and/or electromagnetic shielding.

Furthermore, the presence of the flexible tabs 99 ensures the electrical continuity between the front portion 37 and/or the transceiver housing and the inner surface of the receptacle 84, even in the event of maximum misalignment between the front portion 37 and the SFP connector 81 supported by the printed circuit board 83 of the electronic device 8 to which the transceiver 10 is connected. A surface treatment on the frame raw material provides a good electrical conductivity required for the grounding function achieved by the tabs 99.

In the embodiment shown in Figure 18, the frame 91 has four lateral walls in each of which a plurality of thermally conductive flexible blades 90 is located forming thus four heat transfer surfaces.

The plurality of thermally conductive flexible blades 90 of each wall is in contact with an inner surface of front part 37 (Figure 19). This configuration increases the number of thermal links between the transceiver 10 and the front part 37, improving the thermal transfer.

Figure 20 shows another embodiment of the passive thermal transfer device 9, in which no rigid frame 91 is present. The t- thermally conductive flexible blades 90 are directly inserted in the front portion 37.

Indeed, in this embodiment, the front portion 37 has a plurality of slots 371 each opening inwards. These slots 371 can be achieved for instance by machining in the die-cast front portion 37 of the body 3.

As illustrated, the straight portion 900 of each thermally conductive flexible blade90 is inserted by sliding in one slot 371, with a bending of said portion 900 in order to provide a low thermal contact resistance between the blade 90 and the front portion 37. The first curved portion 901 is then located close to the exit of the slot 371.

In this embodiment, the transceiver 10 can also be inserted in the inner cavity of the front portion 37, from its rear side.

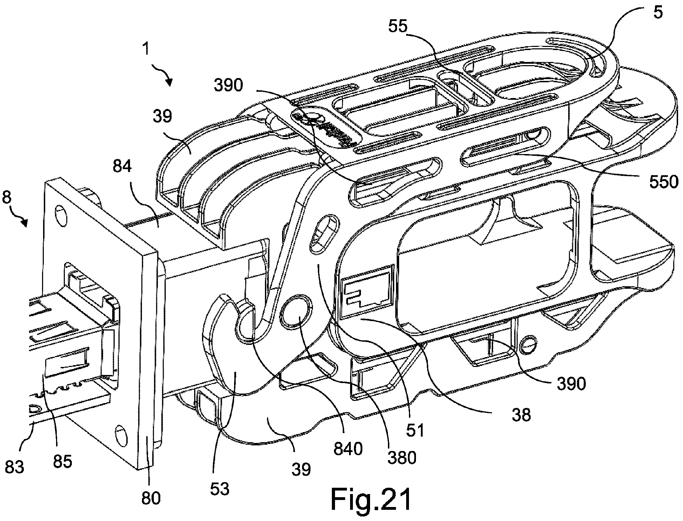

Figure 21 shows a plug 1 connected to a receptacle 84, where the front body 3 is provided with a locking lever 5 with two arms 51 which is mounted so as to pivot about an axis 380 on the rear portion 38 of the body 3. The pivot axis 380 may be integrally molded with the rear portion 38.

The free end of each arm 51 includes a locking hook 53. The lever 5 may be designed with a grip portion 55 that makes it easily possible to manually pivot the lever 5 around the axis 380.

The grip portion 55 may comprise also through holes 550 faced to the through holes 390 of one side of the rear portion 39 to let the ambient air flowing through, in order to improve the thermal dissipation.

The receptacle 84 comprises, on its outer periphery, two locking lugs 840.

In that embodiment the connection process is as follows.

The operator brings the assembled plug 1 so as to face the receptacle 84 and then houses the front portion 37 in the receptacle 84, so as to establish a connection between the transceiver 10 and the contacts 82 of the SFP connector 81 supported by the printed circuit board 83 of the electronic device 8.

Then the operator pivots the locking lever 5 of the plug so as to engage the locking lugs 840 of the receptacle 84 with the locking hooks 53 of the lever 5. The plug 1 is then locked to the receptacle 84.

The passive thermal transfer device 9 which has been described allows an efficient heat exchange surface and thus makes it possible to ensure, through conduction through the front portion 37, the rear portion 38 and the fins 39, the dissipation of heat from the optoelectronic transceiver 10. The heat transfer from the transceiver to the outside air is achieved through only one interface part which is the thermal transfer device 9.

In other words, the passive thermal transfer device 9 creates a short and efficient thermal path between the transceiver 10 and the rear portion 38 located in the external environment, i.e. outside the electronic device 8 and outside the receptacle 84, to efficiently transfer the heat and cool the transceiver 10.

Other variants and enhancements can be provided without in any way departing from the framework of the invention.

For example, the plug 1 may include a cable gland for holding the cable to which the transceiver is connected. The cable gland may comprise a nut, for example made of plastic, intended to screw onto the rear body of the plug and may compress a gasket.

The invention is not limited to the examples that have just been described; it is possible in particular to combine features of illustrated examples in the variants where the features are not illustrated.

## Claims

1. A plug (1), intended to be mounted on at least one cable (2) whose one end supports one or more contacts (21), comprising:
- a front body (3), that extends along a longitudinal axis (X) and the front body comprising:
a front portion (37) housing at least one optoelectronic or electronic transceiver (10), intended to be connected to the contact(s) (21) of the cable, the front portion being intended to be housed in a receptacle (84) when the optoelectronic or electronic transceiver is connected to the connector (81) supported by a printed circuit board (83) of an electronic device,
a rear portion (38) in the rear extension of the front portion, designed as a heat sink in direct contact with the environment air,
- at least one passive thermal transfer device (9) comprising at least one thermally conductive flexible blade (90) with at least :
a first end portion (900) pressing against an inner surface of the front portion, an intermediate portion acting as a spring, and
a second end portion (902) pressing against the outer surface of the optoelectronic or electronic transceiver.

2. The plug according to Claim 1, wherein the at least one thermally conductive flexible blade extends along a longitudinal axis (Y) transverse, notably orthogonal to the longitudinal axis (X).

3. The plug according to Claim 1 or Claim 2, comprising a plurality of thermally conductive flexible blades (90) distributed, preferably regularly, along the optoelectronic or electronic transceiver.

4. The plug according to anyone of the preceding claims, wherein the rear portion comprises a plurality of cooling fins (39) designed to evacuate the heat into the outside environment.

5. The plug according to anyone of the preceding claims, wherein the front portion has at least one slot (371) opening inwards and in which the straight portion of the at least one thermally conductive flexible blade is inserted.

6. The plug according to anyone of claims 1 to 4, wherein the at least one passive thermal transfer device comprises:
- a rigid frame (91) mounted onto the front portion,
- the thermally conductive flexible blade(s) (90) which is(are) hold and positioned in the rigid frame, such that the straight portion(s) presses against the inner surface of the front portion and the curved portion(s) acts as a spring pressing against the outer surface of the optoelectronic or electronic transceiver.

7. The plug according to Claim 6, wherein the rigid frame and the thermally conductive flexible blade(s) are separate components, the rigid frame comprising mounting slot(s) in which the straight portion of the thermally conductive flexible blade(s) are inserted by rotating the thermally conductive flexible blade(s) such that they are held by the rigid frame.

8. The plug according to Claim 7, wherein the rigid frame comprises supplemental slot(s) each being adjacent to a mounting slot and adapted to receive a part of the curved portion of one blade when this latter bends.

9. The plug according to Claim 6, wherein the frame and thermally conductive flexible blades comprises a plurality of adjacent one-piece parts (96) attached to each other, each one-piece part comprising at least one thermally conductive flexible blade and a portion of the frame forming the straight portion of the thermally conductive flexible blade.

10. The plug according to anyone of Claims 6 to 9, the rigid frame comprising a plurality of flexible tabs (99) made of electrically conductive material and distributed on the outer periphery of the front part, the flexible tabs being designed to remain in mechanical and electrical contact with the inside of the receptacle when the front part of the body is housed in the latter.

11. The plug according to anyone of the preceding claims, the thermally conductive flexible blade(s) being in a copper beryllium alloy with a high thermal conductivity, typically equal to 100 W/m.K or more at ambient temperature.

12. A passive thermal transfer device (9) comprising at least one thermally conductive flexible blade (90) with at least:
- a first end portion (900) configured to press against an inner surface of the portion of a body of a plug (1) or a portion of a receptacle (84),
- an intermediate portion acting as a spring,
- a second end portion (902) configured to press against the outer surface of an optoelectronic or electronic transceiver of the plug (1),
- a rigid frame (91) including at least one mounting slot (94) into which the at least one flexible blade (90) is mounted with clearance.

13. The passive thermal transfer device (9) according to claim 126, wherein the rigid frame (91) has a plate (910) including the at least one mounting slot (94) and having an upper side and a lower side, the plate holding and positioning the at least one thermally conductive flexible blade (90) such that the first end portion (900) faces the upper side of the plate (910) whereas the second end portion (902) faces the lower side of the plate (910).

14. The passive thermal transfer device (9) according to claim 12 or 13, wherein the at least one flexible blade (90) has a straight portion (903) and at least one transverse slot (906) which split said straight portion and the second end portion (902).

15. A connection assembly comprising:
- a plug according to anyone of Claims 1 to 11,
- a receptacle of an electronic device configured to be connected with the plug.
